(19) **Europäisches Patentamt**
**European Patent Office**
**Office européen des brevets**

(11) **EP 4 369 962 B1**

(12) **EUROPEAN PATENT SPECIFICATION**

(45) Date of publication and mention
of the grant of the patent:
**03.09.2025 Bulletin 2025/36**

(21) Application number: **22736305.8**

(22) Date of filing: **12.07.2022**

(51) International Patent Classification (IPC):
**A24F 40/465** *(2020.01)*    **A24F 40/53** *(2020.01)*
**A24F 40/57** *(2020.01)*    **H05B 6/06** *(2006.01)*

(52) Cooperative Patent Classification (CPC):
**A24F 40/465; A24F 40/53; A24F 40/57; H05B 6/06;**
A24F 40/20

(86) International application number:
**PCT/EP2022/069429**

(87) International publication number:
**WO 2023/285447 (19.01.2023 Gazette 2023/03)**

(54) **METHOD FOR CALIBRATING AN INDUCTIVE HEATING DEVICE**

VERFAHREN ZUM KALIBRIEREN EINER INDUKTIVEN HEIZVORRICHTUNG

PROCÉDÉ D'ÉTALONNAGE D'UN DISPOSITIF DE CHAUFFAGE INDUCTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.07.2021 EP 21185110**

(43) Date of publication of application:
**22.05.2024 Bulletin 2024/21**

(73) Proprietor: **Philip Morris Products S.A.
2000 Neuchâtel (CH)**

(72) Inventors:
• **BUTIN, Yannick
2000 Neuchâtel (CH)**

• **CALVINO, Florian Alexis
2000 Neuchâtel (CH)**
• **CHATEAU, Maxime Clément Charles
2000 Neuchâtel (CH)**

(74) Representative: **Grünecker Patent- und
Rechtsanwälte
PartG mbB
Leopoldstraße 4
80802 München (DE)**

(56) References cited:
**WO-A1-2020/064684    WO-A1-2020/223350
US-A1- 2015 060 437**

**Description**

The present disclosure relates to an inductive heating device for heating an aerosol-forming substrate. The present invention further relates to a method for calibrating the inductive heating device.

Aerosol-generating devices may comprise an electrically operated heat source that is configured to heat an aerosol-forming substrate to produce an aerosol. It is important for aerosol-generating devices to accurately monitor and control the temperature of the electrically operated heat source to ensure optimum generation and delivery of an aerosol to a user. In particular, it is important to ensure that the electrically operated heat source does not overheat the aerosol-forming substrate as this may lead to combustion of the aerosol-forming substrate that would result in the generation of undesirable compounds as well as an unpleasant taste and aro

user.

It would be desirable to provide an efficient and fast method for calibrating an inductive heating device that provides for reliable temperature regulation in order to reduce the risk of overheating and ensures continued normal operation of the aerosol-generating device.

WO 2020/223350 A1 discloses a system for determining a characteristic of a susceptor element that may be associated with a vaporizer device. The system includes an inductor element and a control device. The control device is configured to detect a magnetic field associated with the inductor element and determine a characteristic of a susceptor element based on the magnetic field.

It is the object of the present invention to provide an improved method and system that for calibrating an inductive heating device that provides for reliable temperature regulation in order to reduce the risk of overheating and ensures continued normal operation of the aerosol-generating device.

This object is solved by the subject matter of the independent claims.

According to an embodiment of the present invention, there is provided a method for calibrating an inductive heating device for an aerosol-generating system. The method comprises obtaining a sequence of calibration values of an inductive heating device for an aerosol-generating system. The sequence of calibration values is associated with a calibration curve. The method further comprises smoothing the sequence of calibration values to obtain a sequence of smoothed calibration values, determining a first derivative of the sequence of smoothed calibration values, estimating a maximum value of the first derivative of the sequence of smoothed calibration values, determining at least one of a plateauing characteristic and a hill point value based on a first threshold associated with the estimated maximum value of the first derivative, and operating the inductive heating device in accordance with the determined at least one of a plateauing characteristic and a hill point value. The inductive heating device may be a handheld inductive heating device. Alternatively, the inductive heating device may be part of a handheld device

By estimating a maximum value of a first derivative of a sequence of smoothed calibration values and determining at least one of a plateauing characteristic and a hill point value based on a first threshold associated with the estimated maximum value of the first derivativeand operating the inductive heating device in accordance with the determined at least one of a plateauing characteristic and a hill point value, a characteristic point or characteristic property of a calibration curve can be determined in a fast, robust and reliable manner. By operating the inductive heating device in accordance with the determined at least one of a plateauing characteristic and a hill point value, the characteristic point or characteristic property of a calibration curve may be used to prevent overheating of the device for an improved safety of the user. For example, it can be avoided that undesired components are formed when an aerosol-forming substrate is heated above a critical temperature.

The step of smoothing the sequence of calibration values and the step of determining the first derivative of the sequence of smoothed calibration values may be performed in one computation, which may save computing resources.

The step of estimating the maximum value of the first derivative of the sequence of smoothed calibration values may comprise comparing a value of the first derivative of the sequence of smoothed calibration values with a pre-determined number of values of the first derivative of the sequence of smoothed calibration values. Alternatively, a value of the first derivative of the sequence of smoothed calibration values may be estimated as the maximum value, when an average of a predetermined number of previous values of the first derivative of the sequence of smoothed calibration values is higher than the value of the first derivative of the sequence of smoothed calibration values.

The first threshold may be a fraction of the maximum value of the first derivative of the sequence of smoothed calibration values. By determining the at least one of a plateauing characteristic and a hill point value based on a first threshold being a fraction of the maximum value of the first derivative of the sequence of smoothed calibration values, a robust method is provided for determining said at least one of a plateauing characteristic and a hill point value, since at least the plateauing characteristic may be determined although the calibration curve does not comprise a maximum.

The method may comprise the step of stopping heating of the inductive heating device, when the first derivative of the sequence of smoothed calibration values re-increases after the maximum value of the first derivative of the sequence of smoothed calibration values. The re-increase of the first derivative of the sequence of smoothed calibration values after the maximum value of the first derivative of the sequence of smoothed calibration values may be determined when an

**EP 4 369 962 B1**

average of a specific number of consecutive values of the first derivative increase over time.

By stopping heating of the inductive heating device when the first derivative of the sequence of smoothed calibration values re-increases, a save method is provided that protects from overheating.

The method may further comprise determining a type of the calibration curve by classifying the calibration curve, and selecting, based on the determined type of the calibration curve, at least one parameter for the calibration. The calibration curve may be classified based on a slope of the calibration curve. Alternatively or additionally, the calibration curve may be classified based on a time corresponding to the maximum of the first derivative.

This further improves the accuracy and reliability of the calibration process because the parameters may be selected for a specific calibration curve.

The method may further comprise stopping heating of the inductive heating device in response to determining the at least one of a plateauing characteristic and a hill point value. This provides for an efficient and safe calibration method, since the method does not need to heat beyond the hill point to determine the hill point.

According to an embodiment of the present invention, an inductive heating device for an aerosol-generating system is provided, the inductive heating device comprising a controller configured to obtain a sequence of calibration values of the inductive heating device, wherein the sequence of calibration values is associated with a calibration curve; smooth the sequence of calibration values to obtain a sequence of smoothed calibration values; determine a first derivative of the sequence of smoothed calibration values; estimate a maximum value of the first derivative of the sequence of smoothed calibration values; and determine at least one of a plateauing characteristic and a hill point value based on a first threshold associated with the estimated maximum value of the first derivative. The inductive heating device is operated in accordance with the determined at least one of a plateauing characteristic and a hill point value. The inductive heating device may comprise an inductor being inductively couplable to a susceptor for heating an aerosol-forming substrate, and wherein the calibration values are associated with the susceptor. The inductive heating device may comprise a power source for providing a DC supply voltage and a DC current, and power supply electronics connected to the power source. The power supply electronics may comprise: a DC/AC converter; the inductor, wherein the inductor is connected to the DC/AC converter for the generation of an alternating magnetic field, when energized by an alternating current from the DC/AC converter; and the controller, wherein the controller is configured to control the power provided to the power supply electronics to cause an increase of a temperature of the susceptor. The obtaining the sequence of calibration values may comprise measuring a current associated with the supply electronics of the inductive heating device.

This provides an improved inductive heating device that can determine at least one of a plateauing characteristic and a hill point value in a reliable and robust manner for calibrating the inductive heating device with respect to the temperature, without continuously measuring the temperature.

According to an embodiment of the present invention, there is provided an aerosol-generating system, comprising the inductive heating device described above and an aerosol-generating article, wherein the aerosol-generating article comprises the aerosol-forming substrate and the susceptor.

As used herein, the term "aerosol-generating device" refers to a device that interacts with an aerosol-forming substrate to generate an aerosol. An aerosol-generating device may interact with one or both of an aerosol-generating article comprising an aerosol-forming substrate, and a cartridge comprising an aerosol-forming substrate. In some examples, the aerosol-generating device may heat the aerosol-forming substrate to facilitate release of volatile compounds from the substrate. An electrically operated aerosol-generating device may comprise an atomizer, such as an electric heater, to heat the aerosol-forming substrate to form an aerosol.

As used herein, the term "aerosol-generating system" refers to the combination of an aerosol-generating device with an aerosol-forming substrate. When the aerosol-forming substrate forms part of an aerosol-generating article, the aerosol-generating system refers to the combination of the aerosol-generating device with the aerosol-generating article. In the aerosol-generating system, the aerosol-forming substrate and the aerosol-generating device cooperate to generate an aerosol.

As used herein, the term "aerosol-forming substrate" refers to a substrate capable of releasing volatile compounds that can form an aerosol. The volatile compounds may be released by heating or combusting the aerosol-forming substrate. As an alternative to heating or combustion, in some cases, volatile compounds may be released by a chemical reaction or by a mechanical stimulus, such as ultrasound. The aerosol-forming substrate may be solid or may comprise both solid and liquid components. An aerosol-forming substrate may be part of an aerosol-generating article.

As used herein, the term "aerosol-generating article" refers to an article comprising an aerosol-forming substrate that is capable of releasing volatile compounds that can form an aerosol. An aerosol-generating article may be disposable. An aerosol-generating article comprising an aerosol-forming substrate comprising tobacco may be referred to herein as a tobacco stick.

An aerosol-forming substrate may comprise nicotine. An aerosol-forming substrate may comprise tobacco, for example may comprise a tobacco-containing material containing volatile tobacco flavor compounds, which are released from the aerosol-forming substrate upon heating. In preferred embodiments an aerosol-forming substrate may comprise homogenized tobacco material, for example cast leaf tobacco. The aerosol-forming substrate may comprise both solid and liquid components. The aerosol-forming substrate may comprise a tobacco-containing material containing volatile tobacco flavor compounds, which are released from the substrate upon heating. The aerosol-forming substrate may comprise a non-tobacco material. The aerosol-forming substrate may further comprise an aerosol former. Examples of suitable aerosol formers are glycerin and propylene glycol.

As used herein, the term "susceptor" refers to an element comprising a material that is capable of converting the energy of a magnetic field into heat. When a susceptor is located in an alternating magnetic field, the susceptor is heated. Heating of the susceptor may be the result of at least one of hysteresis losses and eddy currents induced in the susceptor, depending on the electrical and magnetic properties of the susceptor material.

As used herein when referring to an aerosol-generating device, the terms "upstream" and "front", and "downstream" and "rear", are used to describe the relative positions of components, or portions of components, of the aerosol-generating device in relation to the direction in which air flows through the aerosol-generating device during use thereof. Aerosol-generating devices according to the invention comprise a proximal end through which, in use, an aerosol exits the device. The proximal end of the aerosol-generating device may also be referred to as the mouth end or the downstream end. The mouth end is downstream of the distal end. The distal end of the aerosol-generating article may also be referred to as the upstream end. Components, or portions of components, of the aerosol-generating device may be described as being upstream or downstream of one another based on their relative positions with respect to the airflow path of the aerosol-generating device.

As used herein when referring to an aerosol-generating article, the terms "upstream" and "front", and "downstream" and "rear", are used to describe the relative positions of components, or portions of components, of the aerosol-generating article in relation to the direction in which air flows through the aerosol-generating article during use thereof. Aerosol-generating articles according to the invention comprise a proximal end through which, in use, an aerosol exits the article. The proximal end of the aerosol-generating article may also be referred to as the mouth end or the downstream end. The mouth end is downstream of the distal end. The distal end of the aerosol-generating article may also be referred to as the upstream end. Components, or portions of components, of the aerosol-generating article may be described as being upstream or downstream of one another based on their relative positions between the proximal end of the aerosol-generating article and the distal end of the aerosol-generating article. The front of a component, or portion of a component, of the aerosol-generating article is the portion at the end closest to the upstream end of the aerosol-generating article. The rear of a component, or portion of a component, of the aerosol-generating article is the portion at the end closest to the downstream end of the aerosol-generating article.

As used herein, the term "inductively couple" refers to the heating of a susceptor when penetrated by an alternating magnetic field. The heating may be caused by the generation of eddy currents in the susceptor. The heating may be caused by magnetic hysteresis losses.

Examples will now be further described with reference to the figures in which:

Figure 1 shows a schematic cross-sectional illustration of an aerosol-generating article;
Figure 2A shows a schematic cross-sectional illustration of an aerosol-generating device for use with the aerosol-generating article illustrated in Figure 1;
Figure 2B shows a schematic cross-sectional illustration of the aerosol-generating device in engagement with the aerosol-generating article illustrated in Figure 1;
Figure 3 is a block diagram showing an inductive heating device of the aerosol-generating device described in relation to Figure 2;
Figure 4 is a schematic diagram showing electronic components of the inductive heating device described in relation to Figure 3;
Figure 5 is a schematic diagram on an inductor of an LC load network of the inductive heating device described in relation to Figure 4;
Figure 6 is a graph of DC current vs. time illustrating the remotely detectable current changes that occur when a susceptor material undergoes a phase transition associated with its Curie point;
Figure 7 illustrates a temperature profile of the susceptor during operation of the aerosol-generating device;
Figure 8 is a flow diagram showing a method of calibrating an inductive heating device for an aerosol-generating system;
Figure 9A illustrates a classification tree that may be trained on test recalibration curves;
Figure 9B illustrates a classification tree that may be trained on test calibration curves; and
Figure 10 illustrates an example of a recalibration curve.

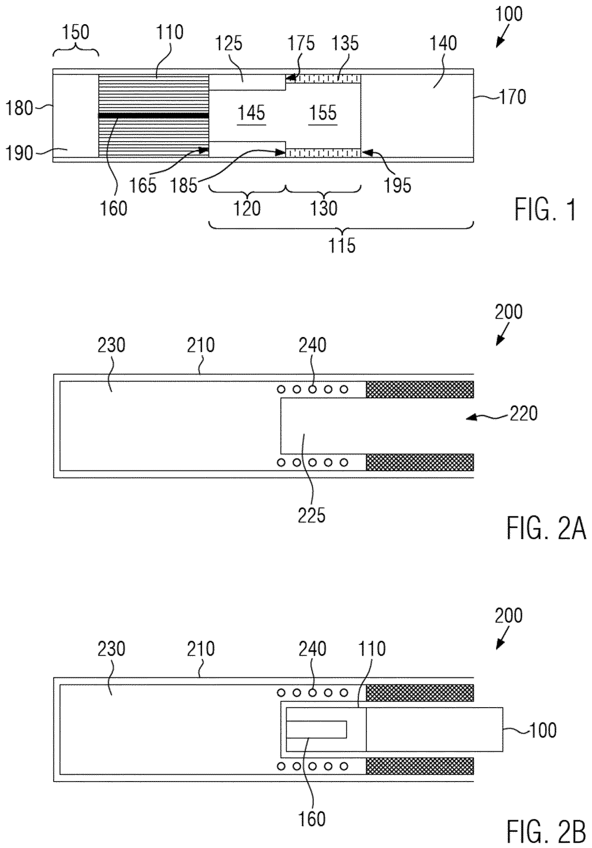

Figure 1 illustrates a schematic side sectional view of an aerosol-generating article 100. The aerosol-generating article 100 comprises a rod of aerosol-forming substrate 110 and a downstream section 115 at a location downstream of the rod of aerosol-forming substrate 110. The aerosol-generating article 100 comprises an upstream section 150 at a location upstream of the rod of aerosol-forming substrate. Thus, the aerosol-generating article 100 extends from an upstream or distal end 180 to a downstream or mouth end 170. In use, air is drawn through the aerosol-generating article 100 by a user from the distal end 180 to the mouth end 170.

The downstream section 115 comprises a support element 120 located immediately downstream of the rod of aerosol-forming substrate, the support element 120 being in longitudinal alignment with the rod 110. The upstream end of the support element 120 abuts the downstream end of the rod of aerosol-forming substrate 110. In addition, the downstream section 115 comprises an aerosol-cooling element 130 located immediately downstream of the support element 120, the aerosol-cooling element 130 being in longitudinal alignment with the rod 110 and the support element 120. The upstream end of the aerosol-cooling element 130 abuts the downstream end of the support element 120. In use, volatile substances released from the aerosol-forming substrate 110 pass along the aerosol-cooling element 130 towards the mouth end 170 of the aerosol-generating article 100. The volatile substances may cool within the aerosol-cooling element 130 to form an aerosol that is inhaled by the user.

The support element 120 comprises a first hollow tubular segment 125. The first hollow tubular segment 125 is provided in the form of a hollow cylindrical tube made of cellulose acetate. The first hollow tubular segment 125 defines an internal cavity 145 that extends all the way from an upstream end 165 of the first hollow tubular segment 125 to a downstream end 175 of the first hollow tubular segment 125.

The aerosol-cooling element 130 comprises a second hollow tubular segment 135. The second hollow tubular segment 135 is provided in the form of a hollow cylindrical tube made of cellulose acetate. The second hollow tubular segment 135 defines an internal cavity 155 that extends all the way from an upstream end 185 of the second hollow tubular segment 135 to a downstream end 195 of the second hollow tubular segment 135. In addition, a ventilation zone (not shown) is provided at a location along the second hollow tubular segment 135. A ventilation level of the aerosol-generating article 10 is about 25 percent.

The downstream section 115 further comprises a mouthpiece 140 positioned immediately downstream of the aerosol-cooling element 130. As shown in the drawing of Figure 1, an upstream end of the mouthpiece 140 abuts the downstream end 195 of the aerosol-cooling element 130. The mouthpiece 140 is provided in the form of a cylindrical plug of low-density cellulose acetate.

The aerosol-generating article 100 further comprises an elongate susceptor 160 within the rod of aerosol-generating substrate 110. In more detail, the susceptor 160 is arranged substantially longitudinally within the aerosol-forming substrate 110, such as to be approximately parallel to the longitudinal direction of the rod 110. As shown in the drawing of Figure 1, the susceptor 160 is positioned in a radially central position within the rod and extends effectively along the longitudinal axis of the rod 110.

The susceptor 160 extends all the way from an upstream end to a downstream end of the rod of aerosol-forming substrate 110. In effect, the susceptor 160 has substantially the same length as the rod of aerosol-forming substrate 110. The susceptor 160 is located in thermal contact with the aerosol-forming substrate 110, such that the aerosol-forming substrate 110 is heated by the susceptor 160 when the susceptor 160 is heated.

The upstream section 150 comprises an upstream element 190 located immediately upstream of the rod of aerosol-forming substrate 110, the upstream element 190 being in longitudinal alignment with the rod 110. The downstream end of the upstream element 190 abuts the upstream end of the rod of aerosol-forming substrate. This advantageously prevents the susceptor 160 from being dislodged. Further, this ensures that the consumer cannot accidentally contact the heated susceptor 160 after use. The upstream element 190 is provided in the form of a cylindrical plug of cellulose acetate circumscribed by a stiff wrapper.

The susceptor 160 comprises at least two different materials. The susceptor 160 comprises at least two layers: a first layer of a first susceptor material disposed in physical contact with a second layer of a second susceptor material. The first susceptor material and the second susceptor material may each have a Curie temperature. In this case, the Curie temperature of the second susceptor material is lower than the Curie temperature of the first susceptor material. The first material may not have a Curie temperature. The first susceptor material may be aluminum, iron or stainless steel. The second susceptor material may be nickel or a nickel alloy.

The susceptor 160 may be formed by electroplating at least one patch of the second susceptor material onto a strip of the first susceptor material. The susceptor may be formed by cladding a strip of the second susceptor material to a strip of the first susceptor material.

The aerosol-generating article 100 illustrated in Figure 1 is designed to engage with an aerosol-generating device, such as the aerosol-generating device 200 illustrated in Figure 2A, for producing an aerosol. The aerosol-generating device 200 comprises a housing 210 having a cavity 220 configured to receive the aerosol-generating article 100 and an inductive heating device 230 configured to heat an aerosol-generating article 100 for producing an aerosol. Figure 2B illustrates the aerosol-generating device 200 when the aerosol-generating article 100 is inserted into the cavity 220. The aerosol-generating device 200 may optionally further comprise a puff detector located within or near the cavity 220 (not shown) for detecting puffs. The puff detector is located within or near the cavity 200 such that the puff detector is placed along the path of the airflow when a user takes a puff. The puff detector may comprise one or more temperature detectors to detect a temperature change of air flow in the cavity 220 indicative of the user taking a puff. Additionally, or alternatively, the puff detector may comprise a pressure sensor to detect a decrease in pressure of the air flow in the cavity 220 indicative of a user taking a puff.

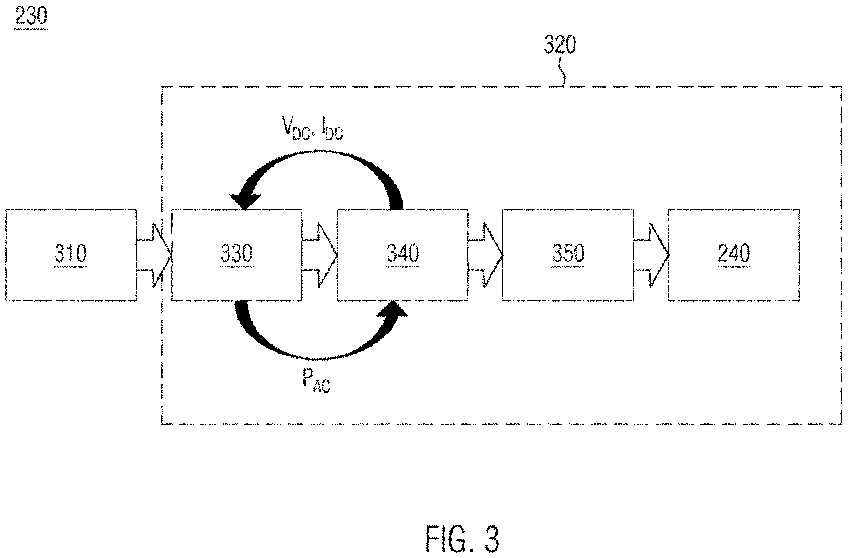

The inductive heating device 230 is illustrated as a block diagram in Figure 3. The inductive heating device 230 comprises a DC power source 310 and a heating arrangement 320 (also referred to as power supply electronics). The heating arrangement comprises a controller 330, a DC/AC converter 340, a matching network 350 and an inductor 240.

The DC power source 310 is configured to provide DC power to the heating arrangement 320. Specifically, the DC power source 310 is configured to provide a DC supply voltage ($V_{DC}$) and a DC current ($I_{DC}$) to the DC/AC converter 340. Preferably, the power source 310 is a battery, such as a lithium ion battery. As an alternative, the power source 310 may be another form of charge storage device such as a capacitor. The power source 310 may require recharging. For example, the power source 310 may have sufficient capacity to allow for the continuous generation of aerosol for a period of around six minutes or for a period that is a multiple of six minutes. In another example, the power source 310 may have sufficient capacity to allow for a predetermined number of puffs or discrete activations of the heating arrangement.

The DC/AC converter 340 is configured to supply the inductor 240 with a high frequency alternating current. As used herein, the term "high frequency alternating current" means an alternating current having a frequency of between about 500 kilohertz and about 30 megahertz. The high frequency alternating current may have a frequency of between about 1 megahertz and about 30 megahertz, such as between about 1 megahertz and about 10 megahertz, or such as between about 5 megahertz and about 8 megahertz.

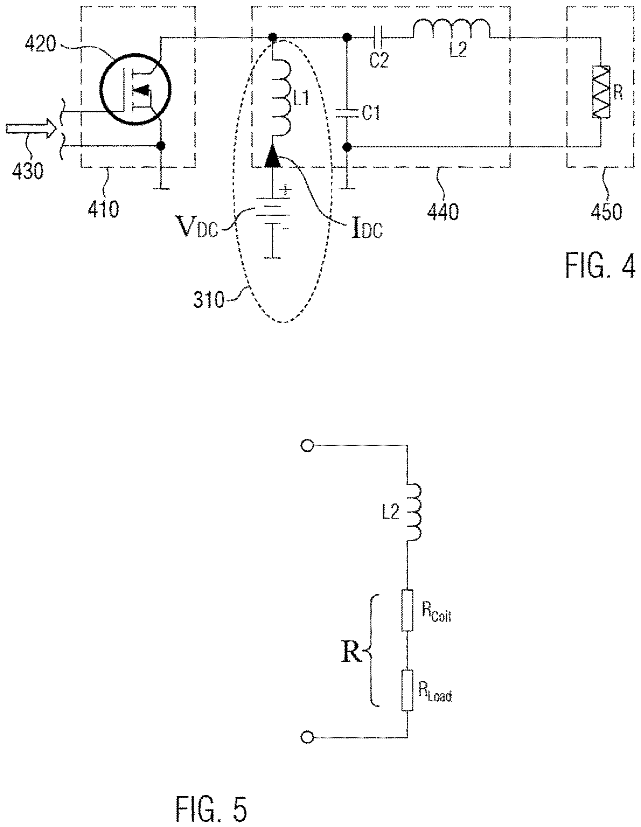

Figure 4 schematically illustrates the electrical components of the inductive heating device 230, in particular the DC/AC converter 340. The DC/AC converter 340 preferably comprises a Class-E power amplifier. The Class-E power amplifier comprises a transistor switch 410 comprising a Field Effect Transistor 420, for example a Metal-Oxide-Semiconductor Field Effect Transistor, a transistor switch supply circuit indicated by the arrow 430 for supplying a switching signal (gate-source voltage) to the Field Effect Transistor 420, and an LC load network 440 comprising a shunt capacitor C1 and a series connection of a capacitor C2 and inductor L2, corresponding to inductor 240. In addition, the DC power source 310, comprising a choke L1, is shown for supplying the DC supply voltage $V_{DC}$, with a DC current $I_{DC}$ being drawn from the DC power source 310 during operation. The ohmic resistance R representing the total ohmic load 450, which is the sum of the ohmic resistance $R_{coil}$ of the inductor L2 and the ohmic resistance $R_{load}$ of the susceptor 160, is shown in more detail in Figure 5.

Although the DC/AC converter 340 is illustrated as comprising a Class-E power amplifier, it is to be understood that the DC/AC converter 340 may use any suitable circuitry that converts DC current to AC current. For example, the DC/AC converter 340 may comprise a class-D power amplifier comprising two transistor switches. As another example, the DC/AC converter 340 may comprise a full bridge power inverter with four switching transistors acting in pairs.

Turning back to Figure 3, the inductor 240 may receive the alternating current from the DC/AC converter 340 via a matching network 350 for optimum adaptation to the load, but the matching network 350 is not essential. The matching network 350 may comprise a small matching transformer. The matching network 350 may improve power transfer efficiency between the DC/AC converter 340 and the inductor 240.

As illustrated in Figure 2A, the inductor 240 is located adjacent to the distal portion 225 of the cavity 220 of the aerosol-generating device 200. Accordingly, the high frequency alternating current supplied to the inductor 240 during operation of the aerosol-generating device 200 causes the inductor 240 to generate a high frequency alternating magnetic field within the distal portion 225 of the aerosol-generating device 200. The alternating magnetic field preferably has a frequency of between 1 and 30 megahertz, preferably between 2 and 10 megahertz, for example between 5 and 7 megahertz. As can be seen from Figure 2B, when an aerosol-generating article 100 is inserted into the cavity 200, the aerosol-forming substrate 110 of the aerosol-generating article 100 is located adjacent to the inductor 240 so that the susceptor 160 of the aerosol-generating article 100 is located within this alternating magnetic field. When the alternating magnetic field penetrates the susceptor 160, the alternating magnetic field causes heating of the susceptor 160. For example, eddy currents are generated in the susceptor 160 which is heated as a result. Further heating is provided by magnetic hysteresis losses within the susceptor 160. The heated susceptor 160 heats the aerosol-forming substrate 110 of the aerosol-generating article 100 to a sufficient temperature to form an aerosol. The aerosol is drawn downstream through the aerosol-generating article 100 and inhaled by the user.

The controller 330 may be a microcontroller, preferably a programmable microcontroller. The controller 330 is programmed to regulate the supply of power from the DC power source 310 to the inductive heating arrangement 320 in order to control the temperature of the susceptor 160.

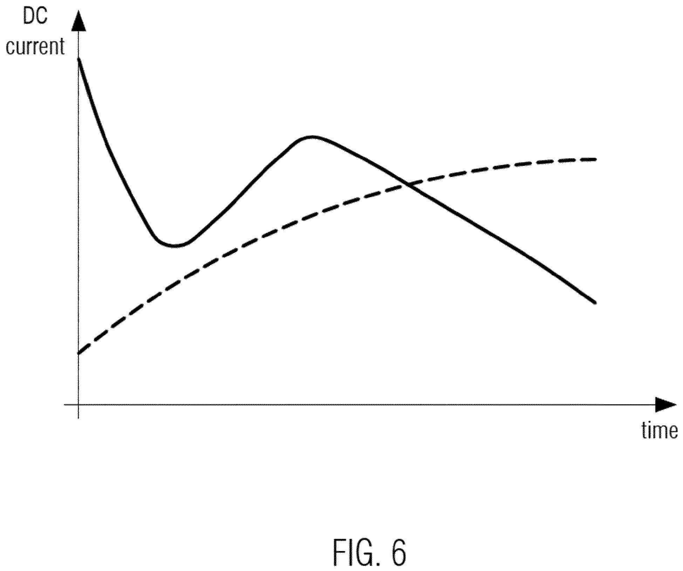

Figure 6 illustrates the relationship between the DC current $I_{DC}$ drawn from the power source 310 over time as the temperature of the susceptor 160 (indicated by the dashed line) increases. More specifically, Figure 6 illustrates the remotely-detectable DC current changes that occur when a susceptor material undergoes a phase transition associated with its Curie point. The DC current $I_{DC}$ drawn from the power source 310 is measured at an input side of the DC/AC converter 340. For the purpose of this illustration, it may be assumed that the voltage $V_{DC}$ of the power source 310 remains approximately constant.

As the susceptor 160 is inductively heated, the apparent resistance of the susceptor 160 increases. This increase in resistance is observed as a decrease in the DC current $I_{DC}$ drawn from the power source 310, which at constant voltage decreases as the temperature of the susceptor 160 increases. The high frequency alternating magnetic field provided by the inductor 240 induces eddy currents in close proximity to the susceptor surface, an effect that is known as the skin effect. The resistance in the susceptor 160 depends in part on the electrical resistivity of the first susceptor material, the resistivity of the second susceptor material and in part on the depth of the skin layer in each material available for induced eddy currents, and the resistivity is in turn temperature dependent.

As the second susceptor material reaches its Curie temperature, it loses its magnetic properties. This causes an increase in the skin layer available for eddy currents in the second susceptor material, which causes a decrease in the apparent resistance of the susceptor 160. The result is a temporary increase in the detected DC current $I_{DC}$. Then, when the skin depth of the second susceptor material begins to increase, the resistance begins to fall. This is seen as the valley (the local minimum) in Figure 6.

As heating continues, the current continues to increase until the maximum skin depth is reached, which coincides with the point where the second susceptor material has lost its spontaneous magnetic properties. This point is called the Curie temperature and is seen as the hill (the local maximum) in Figure 6. At this point the second susceptor material has undergone a phase change from a ferro-magnetic or ferri-magnetic state to a paramagnetic state. At this point, the susceptor 160 is at a known temperature (the Curie temperature, which is an intrinsic material-specific temperature).

If the inductor 240 continues to generate an alternating magnetic field (i.e. power to the DC/AC converter 340 is not interrupted) after the Curie temperature has been reached, the eddy currents generated in the susceptor 160 will run against the resistance of the susceptor 160, whereby Joule heating in the susceptor 160 will continue, and thereby the resistance will increase again (the resistance will have a polynomial dependence of the temperature, which for most metallic susceptor materials can be approximated to a third degree polynomial dependence for our purposes) and current will start falling again as long as the inductor 240 continues to provide power to the susceptor 160.

Therefore, the second susceptor material undergoes a reversible phase transition when heated through the (known) temperature range between the valley and the hill shown in Figure 6. As can be seen from Figure 6, the apparent resistance of the susceptor 160, and hence the start and end of the phase transition, can be remotely detected by monitoring the DC current $I_{DC}$ drawn from the power source 310. Alternatively, the apparent resistance of the susceptor 160, and hence the start and end of the phase transition, can be remotely detected by monitoring a conductance value (where conductance is defined as the ratio of the DC current $I_{DC}$ to the DC supply voltage $V_{DC}$) or a resistance value (where resistance is defined as the ratio of the DC supply voltage $V_{DC}$ to the DC current $I_{DC}$). At least the DC current $I_{DC}$ drawn from the power source 310 is monitored by the controller 330. Although the DC supply voltage $V_{DC}$ is known, preferably both the DC current $I_{DC}$ drawn from the power source 310 and the DC supply voltage $V_{DC}$ are monitored. The DC current $I_{DC}$, the conductance value and the resistance value may be referred to as power source parameters.

As the susceptor 160 is heated, a first turning point (corresponding to a local minimum for current and a local maximum for resistance) corresponds to the start of the phase transition. Then, as the susceptor continues to be heated, a second turning point (corresponding to a local maximum for current and a local minimum for resistance) corresponds to the end of the phase transition.

Furthermore as can be seen from Figure 6, the apparent resistance of the susceptor 160 (and correspondingly the current $I_{DC}$ drawn from the power source 310) may vary with the temperature of the susceptor 160 in a strictly monotonic relationship over certain ranges of temperature of the susceptor 160, such as between the valley and the hill. The strictly monotonic relationship allows for an unambiguous determination of the temperature of the susceptor 160 from a determination of the apparent resistance (R) or apparent conductance (1/R). This is because each determined value of the apparent resistance is representative of only one single value of the temperature, so that there is no ambiguity in the relationship. The monotonic relationship of the temperature of the susceptor 160 and the apparent resistance in the temperature range in which the second susceptor material undergoes the reversible phase transition allows for the determination and control of the temperature of the susceptor 160 and thus for the determination and control of the temperature of the aerosol-forming substrate 110.

The controller 330 regulates the supply of power provided to the heating arrangement 320 based on a power supply parameter. The heating arrangement 320 may comprise a current sensor (not shown) to measure the DC current $I_{DC}$. The heating arrangement may optionally comprise a voltage sensor (not shown) to measure the DC supply voltage $V_{DC}$. The current sensor and the voltage sensor are located at an input side of the DC/AC converter 340. The DC current $I_{DC}$ and optionally the DC supply voltage $V_{DC}$ are provided by feedback channels to the controller 330 to control the further supply of AC power $P_{AC}$ to the inductor 240.

The controller 330 may control the temperature of the susceptor 160 by maintaining the measured power supply parameter value at a target value corresponding to a target operating temperature of the susceptor 160. The controller 330 may use any suitable control loop to maintain the measured power supply parameter at the target value, for example by using a proportional-integral-derivative control loop.

Further, the controller 330 may maintain the temperature of the susceptor 160 below a predetermined threshold temperature by maintaining the measured conductance or current value below a predetermined threshold conductance value or by maintaining the measured resistance value above a predetermined threshold resistance value. The predetermined threshold temperature is chosen to prevent overheating of the aerosol-forming substrate. If the measured power supply parameter indicates that the temperature of the susceptor is above the predetermined threshold temperature, the controller 330 is programmed to enter a safety mode. In the safety mode, the controller 330 is configured to perform one or more actions such as generating an alarm that (visually and additionally or alternatively audibly) provides an overheating warning to the user, switching off the aerosol-generating device and preventing further use if the aerosol-generating device for a predefined period of time.

In order to take advantage of the strictly monotonic relationship between the apparent resistance (or apparent conductance) of the susceptor 160 and the temperature of the susceptor 160, during user operation for producing an aerosol, the power supply parameter measured at the input side of the DC/AC converter 340 is maintained between a first calibration value corresponding to a first calibration temperature and a second calibration value corresponding to a second calibration temperature. The second calibration temperature is the Curie temperature of the second susceptor material (the hill in the current plot in Fig. 6). The first calibration temperature is a temperature greater than or equal to the temperature of the susceptor at which the skin depth of the second susceptor material begins to increase, leading to a temporary lowering of the resistance (the valley in the current plot in Figure 6). Thus, the first calibration temperature is a temperature greater than or equal to the temperature at maximum permeability of the second susceptor material. The first calibration temperature is at least 50 degrees Celsius lower than the second calibration temperature. At least the second calibration value may be determined by calibration of the susceptor 160, as will be described in more detail below. The first calibration value and the second calibration value may be stored as calibration values in a memory of the controller 330.

Since the power supply parameter will have a polynomial dependence on the temperature, the power supply parameter will behave in a nonlinear manner as a function of temperature. However, the first and the second calibration values are chosen so that this dependence may be approximated as being linear between the first calibration value and the second calibration value because the difference between the first and the second calibration values is small, and the first and the second calibration values are in the upper part of the operational temperature range. Therefore, to adjust the temperature to a target operating temperature, the power supply parameter is regulated according to the first calibration value and the second calibration value, through linear equations.

For example, if the first and the second calibration values are conductance values, the target conductance value corresponding to the target operating temperature may be given by:

$$G_{Target} = G_{Lower} + (x \times \Delta G)$$

where $\Delta G$ is the difference between the first conductance value and the second conductance value and $x$ is a percentage of $\Delta G$.

The controller 330 may control the provision of power to the heating arrangement 320 by adjusting the duty cycle of the switching transistor 410 of the DC/AC converter 340. For example, during heating, the DC/AC converter 340 continuously generates alternating current that heats the susceptor 160, and simultaneously the DC current $I_{DC}$ and optionally the DC supply voltage $V_{DC}$ may be measured, preferably every millisecond for a period of 100 milliseconds.

For example, if the conductance or current is monitored by the controller 330 for adjusting the susceptor temperature, when the conductance or current reaches or exceeds a value corresponding to the target operating temperature for adjusting the susceptor temperature, the duty cycle of the switching transistor 410 is reduced. If the resistance is monitored by the controller 330 for adjusting the susceptor temperature, when the resistance reaches or goes below a value corresponding to the target operating temperature, the duty cycle of the switching transistor 410 is reduced. For example, the duty cycle of the switching transistor 410 may be reduced to about 10%. In other words, the switching transistor 410 may be switched to a mode in which it generates pulses only every 10 milliseconds for a duration of 1 millisecond. During this 1 millisecond on-state (conductive state) of the switching transistor 410, the values of the DC supply voltage $V_{DC}$ and of the DC current $I_{DC}$ are measured and the conductance is determined. As the conductance decreases (or the resistance increases) to indicate that the temperature of the susceptor 160 is below the target operating temperature, the gate of the transistor 410 is again supplied with the train of pulses at the chosen drive frequency for the system.

The power may be supplied by the controller 330 to the inductor 240 in the form of a series of successive pulses of electrical current. In particular, power may be supplied to the inductor 240 in a series of pulses, each separated by a time interval. The series of successive pulses may comprise two or more heating pulses and one or more probing pulses between successive heating pulses. The heating pulses have an intensity such as to heat the susceptor 160. The probing pulses are isolated power pulses having an intensity such not to heat the susceptor 160 but rather to obtain a feedback on the power supply parameter and then on the evolution (decreasing) of the susceptor temperature. The controller 330 may control the power by controlling the duration of the time interval between successive heating pulses of power supplied by the DC power supply to the inductor 240. Additionally or alternatively, the controller 330 may control the power by controlling the length (in other words, the duration) of each of the successive heating pulses of power supplied by the DC power supply to the inductor 240.

The controller 330 is programmed to perform a calibration process in order to obtain the calibration values at which the power supply parameter is measured at known temperatures of the susceptor 160. The known temperatures of the susceptor may be the first calibration temperature corresponding to the first calibration value and the second calibration temperature corresponding to the second calibration value. The calibration process is performed each time the user operates the aerosol-generating device 200. For example, the controller 330 may be configured to enter a calibration mode for performing the calibration process when the user switches on the aerosol-generating device. The controller 330 may be programmed to enter the calibration mode each time the user inserts an aerosol-generating article 100 into an aerosol-generating device 200. Thus, the calibration process is performed during a first heating phase of the aerosol-generating device, before user operation of the aerosol-generating device 200 for generating an aerosol.

During the calibration process, the controller 330 controls the DC/AC converter 340 to continuously or continually supply power to the inductor 240 in order to heat the susceptor 160. The controller 330 monitors the power supply parameter by measuring the current $I_{DC}$ drawn by the power supply and, optionally the power supply voltage $V_{DC}$. As discussed above in relation to Figure 6, as the susceptor 160 is heated, the measured current decreases until a first turning point is reached and the current begins to increase. This first turning point corresponds to a local minimum conductance or current value (a local maximum resistance value). The controller 330 may record the power supply parameter at the first turning point as the first calibration value.

The conductance or resistance values may be determined based on the measured current $I_{DC}$ and the measured voltage $V_{DC}$. Alternatively, it may be assumed that the power supply voltage $V_{DC}$, which is a known property of the power source 310, is approximately constant. The temperature of the susceptor 160 at the first calibration value is referred to as the first calibration temperature. Preferably, the first calibration temperature is between 150 degrees Celsius and 350 degrees Celsius. More preferably, when the aerosol-forming substrate 110 comprises tobacco, the first calibration temperature is 320 degrees Celsius. The first calibration temperature is at least 50 degrees Celsius lower than the second calibration temperature.

As the controller 330 continues to control the power provided by the DC/AC converter 340 to the inductor 240, the controller 330 continues to monitor the power supply parameter until a second turning point is reached. The second turning point corresponds to a maximum current (corresponding to the Curie temperature of the second susceptor material) before the measured current begins to decrease. This turning point corresponds to a local maximum conductance or current value (a local minimum resistance value). The controller 330 records the power supply parameter value at the second turning point as the second calibration value. The temperature of the susceptor 160 at the second calibration value is referred to as the second calibration temperature. Preferably, the second calibration temperature is between 200 degrees Celsius and 400 degrees Celsius. When the maximum is detected, the controller 330 controls the DC/AC converter 340 to interrupt provision of power to the inductor 240, resulting in a decrease in susceptor 160 temperature and a corresponding decrease in measured current.

Due to the shape of the graph, this process of continuously heating the susceptor 160 to obtain the first calibration value and the second calibration value may be repeated at least once during the calibration mode. After interrupting provision of power to the inductor 240, the controller 330 continues to monitor the power supply parameter until a third turning point is observed. The third turning point corresponds to a second minimum conductance or current value (a second maximum resistance value). When the third turning point is detected, the controller 330 controls the DC/AC converter 340 to continuously provide power to the inductor 240 until a fourth turning point in the monitored power supply parameter is observed. The fourth turning point corresponds to a second maximum conductance or current value (a second minimum resistance value). The controller 330 stores the power supply parameter value that is measured at the third turning point as the first calibration value and the power supply parameter value measured the fourth turning point as the second calibration value. The repetition of the measurement of the turning points corresponding to minimum and maximum measured current significantly improves the subsequent temperature regulation during user operation of the device for producing an aerosol. Preferably, controller 330 regulates the power based on the power supply parameter values obtained from the second maximum and the second minimum, this being more reliable because the heat will have had more time to distribute within the aerosol-forming substrate 110 and the susceptor 160.

Further, during the first heating phase, in order to further improve the reliability of the calibration process, the controller 310 may be optionally programmed to perform a pre-heating process before the calibration process. For example, if the aerosol-forming substrate 110 is particularly dry or in similar conditions, the calibration may be performed before heat has spread within the aerosol-forming substrate 110, reducing the reliability of the calibration values. If the aerosol-forming substrate 110 were humid, the susceptor 160 takes more time to reach the valley temperature (due to water content in the substrate 110).

To perform the pre-heating process, the controller 330 is configured to continuously provide power to the inductor 240. As described above with respect to Figure 6, the measured current starts decreasing with increasing susceptor 160 temperature until a turning point corresponding to minimum measured current is reached. At this stage, the controller 330 is configured to wait for a predetermined period of time to allow the susceptor 160 to cool before continuing heating. The controller 330 therefore controls the DC/AC converter 340 to interrupt provision of power to the inductor 240. After the predetermined period of time, the controller 330 controls the DC/AC converter 340 to provide power until the turning point corresponding to the minimum measured current is reached again. At this point, the controller controls the DC/AC converter 340 to interrupt provision of power to the inductor 240 again. The controller 330 again waits for the same predetermined period of time to allow the susceptor 160 to cool before continuing heating. This heating and cooling of the susceptor 160 is repeated for the predetermined duration of time of the pre-heating process. The predetermined duration of the pre-heating process is preferably 11 seconds. The predetermined combined durations of the pre-heating process followed by the calibration process is preferably 20 seconds.

If the aerosol-forming substrate 110 is dry, the first current minimum of the pre-heating process is reached within the pre-determined period of time and the interruption of power will be repeated until the end of the predetermined time period. If the aerosol-forming substrate 110 is humid, the first current minimum of the pre-heating process will be reached towards the end of the pre-determined time period. Therefore, performing the pre-heating process for a predetermined duration ensures that, whatever the physical condition of the substrate 110, the time is sufficient for the substrate 110 to reach the minimum operating temperature, in order to be ready to feed continuous power and reach the first maximum. This allows a calibration as early as possible, but still without risking that the substrate 110 would not have reached the valley beforehand.

Further, the aerosol-generating article 100 may be configured such that the current minimum is always reached within the predetermined duration of the pre-heating process. If the current minimum is not reached within the pre-determined duration of the pre-heating process, this may indicate that the aerosol-generating article 100 comprising the aerosol-forming substrate 110 is not suitable for use with the aerosol-generating device 200. For example, the aerosol-generating article 100 may comprise a different or lower-quality aerosol-forming substrate 110 than the aerosol-forming substrate 100 intended for use with the aerosol-generating device 200. As another example, the aerosol-generating article 100 may not be configured for use with the heating arrangement 320, for example if the aerosol-generating article 100 and the aerosol-generating device 200 are manufactured by different manufacturers. Thus, the controller 330 may be configured to generate a control signal to cease operation of the aerosol-generating device 200.

As mentioned above, as the first stage of the calibration process, the pre-heating process may be performed in response to receiving a user input, for example user activation of the aerosol-generating device 200. Additionally or alternatively, the controller 330 may be configured to detect the presence of an aerosol-generating article 100 in the aerosol-generating device 200 and the pre-heating process may be performed in response to detecting the presence of the aerosol-generating article 100 within the cavity 220 of the aerosol-generating device 200.

During user operation of the aerosol-generating device 200 for generating an aerosol (referred to as the second heating phase), the apparent conductance (apparent resistance) values at the hill and valley shown in Figure 6 drift over time. This is because, as shown in Figure 5, the apparent resistance of the susceptor is the sum of the ohmic resistance $R_{coil}$ of the inductor L2 and the ohmic resistance $R_{load}$ of the susceptor 160. Therefore any change to the temperature of the inductor L2 during operation of the device 200 will affect the apparent resistance. Therefore, the calibration values measured during the calibration process in the first heating phase will drift during operation of the aerosol-generating device 200.

During normal operation when the aerosol-generating device 200 is generating an aerosol, the controller 330 will be operating in a heating mode for heating the aerosol-forming substrate. The controller 330 may be programmed to enter, from the heating mode, a recalibration mode for performing further iterations of at least part of the calibration process at predefined intervals during user operation of the aerosol-generating device 200 for generating an aerosol. The predefined intervals may be predefined time intervals or a predetermined number of puffs. Additionally, or alternatively, the controller 330 may be programmed to enter the recalibration mode for repeating at least part of the calibration process in response to detection of the completion of a puff. The calibration process may take between 200 milliseconds and 2 seconds to perform.

Performing the further iterations of at least part of the calibration process may comprise re-measuring both the calibration value at both turning points (illustrated as the hill and the valley in Figure 6) or re-measuring only the calibration value at one of the turning points, for example at the local maximum of current or conductance (the local minimum of resistance)

To perform a further iteration of the calibration process (in other words, to perform a recalibration), the controller 330 monitors the power source parameter associated with the susceptor 160 by measuring the current $I_{DC}$ drawn by the power supply and, optionally the power supply voltage $V_{DC}$. Because the minimum operating temperature of the aerosol-generating device is greater than the first calibration temperature, as the susceptor 160 is heated during the further iterations of the calibration process, the measured current $I_{DC}$ increases until a turning point is reached and the current $I_{DC}$ begins to decrease. This turning point corresponds to the end point of the reversible phase transition of the susceptor 160, observed as a local maximum conductance or current value (a local minimum resistance value). The controller 330 records the power source parameter value at the turning point as the re-measured second calibration value.

Once the first turning point has been reached, the controller 330 controls the DC/AC converter 340 to reduce the power provided to the inductor 240 in order to enable the susceptor 160 to cool. For example, the controller 330 may reduce the duty cycle of the DC/AC converter 340 to 10%. The controller 330 may reduce the power provided to the inductor 240 until the susceptor 160 reaches the respective target operating temperature, at which point the controller 300 resumes normal operation in the heating mode.

Alternatively, the controller 330 may continue to reduce the power provided to the inductor 240 until another turning point is observed. This another turning point corresponds to the end point of the reversible phase transition of the susceptor, observed as a local minimum conductance or current value (a local maximum resistance value). The controller 330 records the power source parameter value at the another turning point as the re-measured first calibration value. As described above with respect to the calibration process, the process of measuring the first calibration value and the second calibration value may be repeated at least once during each further iteration of the calibration process.

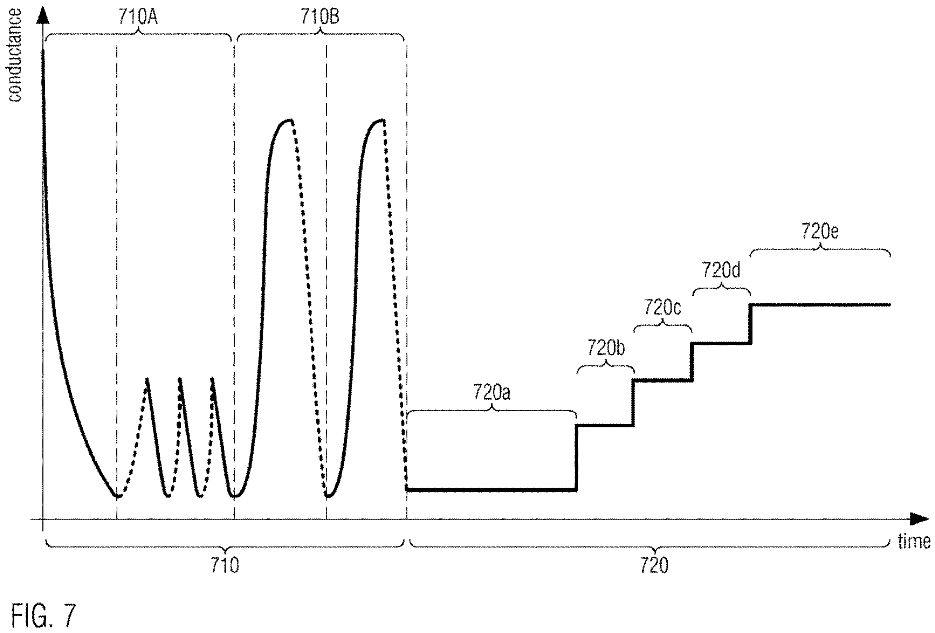

Figure 7 is a graph of conductance against time showing a heating profile of the susceptor 160. The graph illustrates two consecutive phases of heating: a first heating phase 710 comprising the pre-heating process 710A and the calibration process 710B described above, and a second heating phase 720 corresponding to user operation of the aerosol-generating device 200 to produce an aerosol. As described above, during the first heating phase 710, the controller 330 operates in a calibration mode. Once calibration is complete, the controller enters a heating mode and may periodically switch to a re-calibration mode during the second heating phase 720. It is to be understood that Figure 7 is not shown to scale. Specifically, the first heating phase 710 has a shorter duration that the second heating phase 720. For example, the first heating phase 710 may have a duration of between 5 seconds and 30 seconds, preferably between 10 and 20 seconds . The second heating phase 720 may have a duration of between 140 and 340 seconds.

Further, although Figure 7 is illustrated as a graph of conductance against time, it is to be understood that the controller 330 may be configured to control the heating of the susceptor 160 during the first heating phase 710 and the second heating phase 720 based on measured resistance or current as described above. Indeed, although the techniques to control of the heating of the susceptor during the first heating phase 710 and the second heating phase 720 have been described above based on a determined conductance value or a determined resistance value associated with the susceptor, it is to be understood that the techniques described above could be performed based on a value of current measured at the input of the DC/AC converter 340.

As can be seen from Figure 7, the second heating phase 720 comprises a plurality of conductance steps, corresponding to a plurality of temperature steps from a first operating temperature of the susceptor 160 to a second operating temperature of the susceptor 160. The first operating temperature of the susceptor is a temperature at which the aerosol-forming substrate 110 forms an aerosol so that an aerosol is formed during each temperature step. Preferably, the first operating temperature of the susceptor is a minimum temperature at which the aerosol-forming substrate will form an aerosol in a sufficient volume and quantity for a satisfactory experience when inhaled a user. The second operating temperature of the susceptor is the temperature at maximum temperature at which it is desirable for the aerosol-forming substrate to be heated for the user to inhale the aerosol.

The first operating temperature of the susceptor 160 is greater than or equal to the first calibration temperature of the susceptor 160, corresponding to the first calibration value (the valley of the current plot shown in Figure 6). The first operating temperature may be between 150 degrees Celsius and 330 degrees Celsius. The second operating temperature of the susceptor 160 is less than or equal to the second calibration temperature of the susceptor 160, corresponding to the second calibration value at the Curie temperature of the second susceptor material (the hill of the current plot shown in Figure 6). The second operating temperature may be between 200 degrees Celsius and 400 degrees Celsius. The difference between the first operating temperature and the second operating temperature is at least 50 degree Celsius.

It is to be understood that the number of temperature steps illustrated in Figure 7 is exemplary and that second heating phase 720 comprises at least three consecutive temperature steps, preferably between two and fourteen temperature steps, most preferably between three and eight temperature steps. Each temperature step may have a predetermined duration. Preferably the duration of the first temperature step is longer than the duration of subsequent temperature steps. The duration of each temperature step is preferably longer than 10 seconds, preferably between 30 seconds and 200 seconds, more preferably between 40 seconds and 160 seconds. The duration of each temperature step may correspond to a predetermined number of user puffs. Preferably, the first temperature step corresponds to four user puffs and each subsequent temperature step corresponds to one user puff.

For the duration of each temperature step, the temperature of the susceptor 160 is maintained at a target operating temperature corresponding to the respective temperature step. Thus, for the duration of each temperature step, the controller 330 controls the provision of power to the heating arrangement 320 such that the measured power source parameter is maintained at a target value corresponding to the target operating temperature of the respective temperature step, where the target value is determined with reference to the first calibration value and the second calibration value as described above.

As an example, the second heating phase 720 may comprise five temperature steps: a first temperature step 720a having a duration of 160 seconds and a target conductance value of $G_{Target} = G_{Lower} + (0.09 \times \Delta G)$, a second

temperature step 720b having a duration of 40 seconds and a target conductance value of $G_{Target} = G_{Lower} + (0.25 \times \Delta G)$, a third temperature step 720c having a duration of 40 seconds and a target conductance value of $G_{Target} = G_{Lower} + (0.4 \times \Delta G)$, a fourth temperature step 720d having a duration of 40 seconds and a target conductance value of $G_{Target} = G_{Lower} + (0.56 \times \Delta G)$ and a fifth temperature step 720e having a duration of 85 seconds and a target conductance value of $G_{Target} = G_{Lower} + (0.75 \times \Delta G)$. These temperature steps may correspond to temperatures of 330 degrees Celsius, 340 degrees Celsius, 345 degrees Celsius, 355 degrees Celsius and 380 degrees Celsius.

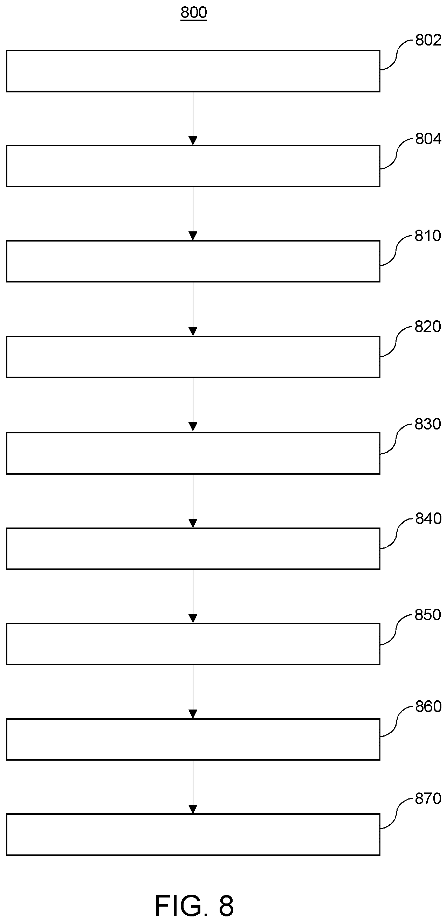

Thus, control of the operating temperature of the susceptor 160 for generating an aerosol depends on the first calibration value (corresponding to the first calibration temperature) and the second calibration value (corresponding to the second calibration temperature) measured during the calibration process. However, the drift in the apparent conductance of the susceptor over the duration of the second heating phase 720, means that, for the same susceptor temperature, the value of the apparent conductance decreases over the duration of the second heating phase 720. Therefore, in order to be able to accurately control the susceptor temperature as well as to prevent overheating of the aerosol-forming substrate 110, the controller 330 is programmed to periodically enter the re-calibration mode for repeating the at least part of the calibration process during the second heating phase 720. For example, at least part of the calibration process is repeated every 15 seconds to 2 minutes. Preferably, at least part of the calibration process is repeated every 30 seconds. This is illustrated in Figure 8, which shows the second heating phase 720 in more detail, including recalibration during each of the temperature steps. Again, Figure 8 is for illustration purposes and is not drawn to scale.

As described above, at least the second calibration value is re-measured during the further iterations of the calibration process, as shown in Figure 8 Optionally, the first calibration value is re-measured during the further iterations of the calibration process. Target power source parameter values corresponding to each temperature step may be stored in the memory of the controller 330 and updated after each iteration of the calibration process. The controller 330 may adjust the target power source parameter value for each respective temperature step based on at least one of the re-measured calibration values, in other words based on at least the re-measured second calibration value. Additionally, or alternatively, the controller 330 may adjust the target power source parameter values for each respective temperature step based on the re-measured first calibration value. Additionally, or alternatively, the controller 330 may adjust the target power source parameter value for each respective temperature step based on a combination of the one or more calibration values measured during the first heating phase 710 and one or more calibration values measured during at least one further iteration of the calibration process during the second heating phase 720.

Therefore, in the example above, for the first temperature step 720a, the target conductance will be based, at least initially at the start of the heating mode, on the calibration values $G_{Lower}$ and $\Delta G$ obtained during the calibration process 710B of the first heating phase 710. Assuming that the controller 330 is programmed to repeat the calibration process every 30 seconds, the calibration process will be repeated five times during the first temperature step, after 30 seconds, 60 seconds, 90 seconds, 120 seconds and 150 seconds. The calibration process will be repeated once during the second temperature step 720b after 180 seconds (20 seconds after the beginning of the second temperature step). The calibration process will be repeated once during the third temperature step 720c after 210 seconds (10 seconds after the beginning of the third temperature step) and at the end of the third temperature step 720c at 240 seconds. The calibration process will be repeated once during the fourth temperature step 720d after 280 seconds (30 seconds after the beginning of the third temperature step). The calibration process will be repeated twice during the fifth temperature step 720e after 320 seconds (20 seconds after the beginning of the fifth temperature step) and after 350 seconds (50 seconds after the beginning of the fifth temperature step). After each further iteration of the calibration process, the controller 330 will adjust $G_{Target}$ based at least in part on at least one of the calibration values resulting from the latest further iteration of the calibration process. For example, the target conductance after each recalibration is adjusted based at least in part on the re-measured calibration values $G_{Lower\_i}$ and $\Delta G_i$ obtained during the respective recalibration process or based on the calibration value $G_{Lower}$ and the re-measured value $\Delta G_i$ obtained during the respective recalibration process, where $i$ = start time of the second heating phase 720 + 30 seconds.

During the second heating phase 720, the user will be drawing the aerosol generated by the aerosol-generating device into their body. In other words, the user will be puffing on the mouthpiece 140 of the aerosol-generating article that is partly received in the aerosol-generating device 200. When the user puffs, cold air is drawn into the aerosol-generating device 200 and through the aerosol-generating article 100, thereby cooling the susceptor 160. Therefore, if recalibration is performed during a puff, the temporary cooling of the susceptor 160 has the effect of temporarily decreasing the difference between the calibration values (for example, decreasing the value of $\Delta G$). In other words, referring again to Figure 6, there is a temporary decrease in the value of current at the hill and a temporary increase in the value of current at the valley for the duration of the puff. Thus, calibration values measured during a user puff will not be accurate. In particular, if the calibration values obtained during a puff were used to control the temperature of the susceptor 160, there would be a risk of overheating the susceptor 160 with the consequent release of unwanted aerosol constituents. The controller 330 is therefore programmed such that recalibration does not overlap with a puff.

An inductive heating device may be a handheld inductive heating device. An inductive heating device may be restricted with respect to the number or size of electronic components comprised in the inductive heating device.

Additionally or alternatively, the components comprised in the inductive heating device may be restricted with respect to processing power or memory.

An inductive heating device or a controller associated with the inductive heating device may be configured to obtain conductance values and process these conductance values to calibrate the inductive heating device. The relationship between the conductance values and a temperature of the susceptor may be known for at least one point. For example, the temperature for at least one of a plateauing characteristic and a hill point value of a calibration curve of the conductance values may be known. Thus, the calibrated inductive heating device can avoid going beyond a Curie temperature of the susceptor. The Curie temperature may be the temperature above which the susceptor loses its permanent magnetic properties.

The calibration may comprise determining a valley point of the calibration curve, which may be referred to as an S-curve, and at least one of a hill point and a plateauing characteristic of the calibration curve. The calibration curve may comprise a minimum, an inflection point, and at least one of a maximum and a plateauing characteristic.

A first characteristic point of the calibration curve may be a minimum in the calibration curve, which is followed by the inflection point and at least one of a maximum and a plateauing characteristic of the calibration curve. The maximum may correspond to a hill point, at which power that is supplied to the inductive heating device is gradually reduced to avoid over-heating. The detection of the minimum, which will also be referred to as a valley or valley point in this application, can be performed by different methods known in the art. However, it can be difficult to determine the maximum or plateauing characteristic of the calibration curve.

The first and second calibration values, as described above, may be determined based on the determined at least one of a plateauing characteristic and a hill point value.

Accordingly, it would be desirable to provide an improved method for reliably determining the maximum or plateauing characteristic of the calibration curve in a fast and efficient manner. In view of the small processing power of the inductive heating device, it would be desirable to keep the mathematical operations as simple as possible. Additionally, it would be desirable to detect overheating or to determine the maximum or plateauing characteristic of the calibration curve in less than 200ms.

A calibration may refer to one of two type of curves comprising a calibration curve and a recalibration curve. A calibration curve may start with a well-defined valley and then gradually increase for a duration of one to several seconds before a plateauing characteristic of the calibration curve is reached. A recalibration curve may not comprise a valley before increasing, are shorter and their duration can be as short as 300ms before a plateauing characteristic of the calibration curve is reached.

Figure 8 is a flow diagram showing a method 800 of determining a plateauing characteristic or a hill point for calibrating an inductive heating device for an aerosol-generating system. The method comprises, in step 810, obtaining a sequence of calibration values of an inductive heating device for an aerosol-generating system. The sequence of calibration values is associated with a calibration curve. The controller 330, as described above, may be programmed to perform the method 800.

In step 820, the sequence of calibration values is smoothed to obtain a sequence of smoothed calibration values. The calibration curve C may be smoothed by convoluting it with a (half) Gaussian kernel G of standard deviation $\sigma$ to denoise it.

At step 830, a first derivative of the sequence of smoothed calibration values is determined. The first derivative may be determined using the property of the convolution that:

$$\frac{d}{dt}(f * g) = \left(\frac{d}{dt}g\right) * f$$

where $g$ is a (symmetric) Gaussian kernel with a standard deviation of $2 \cdot \sigma$. $\sigma$ may denote the standard deviation of a centered Gaussian density. * may denote the convolution product of two function or discrete series. The resulting first derivative is denoted $Z(t)$. Using the associativity of the convolution, the first derivative may be determined by:

$$Z(t) = \frac{d}{dt}\big(g * (G * C)\big) = \left(\left(\frac{d}{dt}g\right) * G\right) * C.$$

The first derivative of the sequence of smoothed calibration may be determined every millisecond. The first derivative of the sequence of smoothed calibration values may be determined as follows:

Determination of smoothed derivative:

---

**Result:** Smoothed derivative of the conductance

**Input:** $S(t_m)$, truncation scale $\lambda = 2$

**Output:** Smoothed value at $t_m \frac{d}{dt} Z(t_m)$

1.
$$\pi(i) = -\frac{t_i}{\sigma^2} \cdot e^{-\frac{t_i}{2 \cdot \sigma^2}}, \, i = -\lambda \cdot \sigma, \ldots, \lambda \cdot \sigma$$

by steps of $10^{-3}$

2.
$$w(i) = e^{\frac{t_i}{\sigma^2}}, \, i = 0, \ldots, 3\sigma$$

by steps of $10^{-3}$

3. Let
$$\Omega(i) = (w * \pi)(i) \frac{d}{dt} Z(t_m) = \Sigma_{i=\max(1, m-2\cdot\lambda\sigma 10^{-3})}^{m} \Omega_{m-i} S(t_i)$$

---

At step 840, a maximum value of the first derivative of the sequence of smoothed calibration values is estimated. The shape of calibration curve, comprising an inflection point and a plateauing property, guarantees that $Z$ has a maximum, which can be detected in a robust manner. The maximum of $Z(t)$ may be at a time *tmax* and estimated by determining the time at which $Z(tmax)$ is lower than the average of the *nmax* previous steps. *nmax* may denote a number of time steps used to robustly detect a maximum.

At step 850, at least one of a plateauing characteristic and a hill point value is determined based on a first threshold associated with the estimated maximum value of the first derivative. For example, the search for the at least one of a plateauing characteristic and a hill point value may start once the $Z(t)$ decreases after the maximum again below $p1 \cdot Z$ (*tmax*) (at time *tp*1 ). *p*1 may define a fraction of $Z(tmax)$ under which $Z(t)$ must be to start a search for the at least one of a plateauing characteristic and a hill point value. For example, *p*1 may be 0.1 for a calibration curve and 0.2 for a recalibration curve. The at least one of a plateauing characteristic and a hill point value may be determined as follows:

Maximum of $Z(t)$ detection and start time for detecting plateau:

**Result:** $t_\alpha$

**Input:** $t_m$, $Z(t)$, $n_{max}$, $P1$

**Output:** $t_\alpha$, $Z_{max}$

1. $t_{max} \leftarrow -1$

2. if $m \geq n_{max} + 1$ then

3.     while $t_\alpha = -1$ do

4.         if $Z(t_m) < ME_{n_{max}}(Z)(t_{m-1})$ $and$ $Z(t_m) > 1$ then

5.             $t_{max} \leftarrow t_m$

6.             $Z_{max} = Z(t_{max})$

7.         end

8.         if $t_{max} > 0$ $and$ $Z(t_m) < p_1 \cdot Z(t_{max})$ then

9.             $t_{p1} \leftarrow t_m$

10.             $m_{p1} \leftarrow m$

11.         end

12.         $m \leftarrow m + nStep$

13.     end

14. end

The heating of the inductive heating device may be stopped in response to determining the at least one of a plateauing characteristic and a hill point value, so that the inductive heating device does not heat beyond temperature associated with the at least one of a plateauing characteristic and a hill point value. A first stopping criteria may be achieved at the time *tstop* where $Z(t_{stop}$ <= $p_{stop1} \cdot Z(t_{max})$. *pstop1* may define a fraction of $Z(tmax)$ under which $Z(t)$ has to be for the first stopping criteria.

At step 860, heating by the inductive heating device may be stopped, when the first derivative of the sequence of smoothed calibration values re-increases after the maximum value of the first derivative of the sequence of smoothed calibration values. For example, a second stopping criteria may be achieved when a re-increasing pattern of $Z(t)$ is detected after $t_{p1}/2$ by checking if 80% of *nstop*2 consecutive steps are re-increasing using the robust criteria $MA_{n_{stop2}}$ $(Z)(t) > MA_{(t-ta) \cdot 1e3}(Z)(t)$, where $MA_n(x)$ is the moving average (convolution) of order *n* for *x*. $ME_n(x)$ be the moving median of order *n* for *x*. *nstop*2 may define a smoothing kernel size for the application for the second stopping criteria. The determining of the stopping of the heating by the inductive heating device may be performed as follows:

Stopping criteria:

**Result:** $stop_1, stop_2$ stopping criteria

**Input:** $t_m > t_\alpha\, t_{p1}, Z(t_m), p_{stop1}, n_{stop2}$

**Output:** Stopping criteria $stop_1, stop_2$

1. if $t_{p1} > 0$ then

2. $\qquad m \leftarrow p1$

3. $\qquad$ while $stop_1 = FALSE\ and\ stop_2 = FALSE$ do

4. $\qquad\qquad$ if $Z(t_m) < Z_{max}\ or\ Z(t_m) < p_{stop1} \cdot Z(t_{max})$ then

5. $\qquad\qquad\qquad stop_1 \leftarrow true$

6. $\qquad\qquad$ end

7. $\qquad\qquad c \leftarrow NULL$

8. $\qquad\qquad$ Compute past average values from $m_{p1}$

9. $\qquad\qquad$ if $m > m_{p1} + n_{stop2} + 1$ then

10. $\qquad\qquad\qquad \mu_p = \frac{1}{m - m_{p1}} \Sigma_{i=m_{p1}}^{m-1} \cdot Z(t_i)$

11. $\qquad\qquad\qquad$ if $MA_{n_{stop2}+1}(Z)(t_m) > \mu_p$ then

12. $\qquad\qquad\qquad\qquad c = \text{concat}(c, 1)$

13. $\qquad\qquad\qquad$ end

14. $\qquad\qquad\qquad$ else

15. $\qquad\qquad\qquad\qquad c = \text{concat}(c, 0)$

16. $\qquad\qquad\qquad$ end

17. $\qquad\qquad\qquad$ if $len(c) \geq n_{stop2}$ then

18. $\qquad\qquad\qquad\qquad p = \frac{1}{n_{stop2}} \Sigma_{i=len_{(c)}-n_{stop2}+1}^{len_{(c)}} c_i$

19. $\qquad\qquad\qquad\qquad$ if $p > 0.8$ then

20. $\qquad\qquad\qquad\qquad\qquad stop_2 \leftarrow TRUE$

21. $\qquad\qquad\qquad\qquad$ end

22. $\qquad\qquad\qquad$ end

23. $\qquad\qquad$ end

24. $\qquad\qquad m = m + nSteps$

25. $\qquad$ end

26. end

The steps 810 to 860 may be repeated periodically. For example, the steps 810 to 860 may be repeated every 10 ms.

At step 870, the inductive heating device is operated in accordance with the determined at least one of a plateauing characteristic and a hill point value. The operating the inductive heating device in accordance with the determined at least one of a plateauing characteristic and a hill point value may comprise maintaining a temperature associated with the aerosol-generating system below a specific temperature based on the determined at least one of a plateauing characteristic and a hill point value.

Calibration curves can have different shapes and/ or slopes. For example, the slope of a calibration curve may depend on the humidity of the substrate to be heated. A calibration for different calibration curves can thus last for different times, which may impact the level of smoothing, which is necessary for detection characteristic points of the calibration curve. Recalibration may take shorter than calibration. A recalibration curve may have a steeper slope compared to a calibration curve. For example, a recalibration may be performed in 300ms until the at least one of a plateauing characteristic and a hill point value are determined.

Predicting of the duration of such curves could be done by machine learning using the time derivatives as inputs.

The derivatives (or approximate thereof), may serve as learning features and may be computed directly from the conductance for the first 38 ms using $MA_{10}$ to smooth the curve. The features may be computed as:

$$100 \cdot \frac{MA_{10}(C)(t_i) - MA_{10}(C)(t_{valley} + 10^{-2})}{MA_{10}(C)(t_{valley} + 10^{-2})}$$

for

$$t_i > t_{valley} + 10^{-2} + 2.$$

The method 800 may autoscale at least one parameter used for determining the at least one of a plateauing characteristic and a hill point value. For example, at step 802, a type of the calibration curve may be determined by classifying the calibration curve. The calibration curve may be classified based on a slope of the calibration curve. The type may be associated with one of a recalibration and a calibration curve and a slope of the one of a recalibration and a calibration curve. The type of the calibration curve may be determined based on a second threshold associated with the estimated maximum value of the first derivative of the sequence of smoothed calibration values.

At step 804, at least one parameter for the calibration may be selected, based on the determined type of the calibration curve. The at least one parameter may comprise at least one of a first parameter, which specifies the first threshold for the step of determining the at least one of a plateauing characteristic and a hill point value, a second parameter, which specifies the smoothing of the sequence of calibration values, a third parameter, which specifies a number of consecutive values of the first derivative of the sequence of smoothed calibration values used for the step of estimating the maximum value of the first derivative, a fourth parameter, which specifies a number of consecutive values of the first derivative of the sequence of smoothed calibration values used for the step of determining the at least one of a plateauing characteristic and a hill point value, and a fifth parameter, which specifies a number of values of the first derivative of the sequence of smoothed calibration values used for the step of determining of a re-increase of the first derivative of the sequence of smoothed calibration values after the maximum value of the first derivative of the sequence of smoothed calibration values. The second threshold may define a fraction of the maximum value of the first derivative of the sequence of smoothed calibration values.

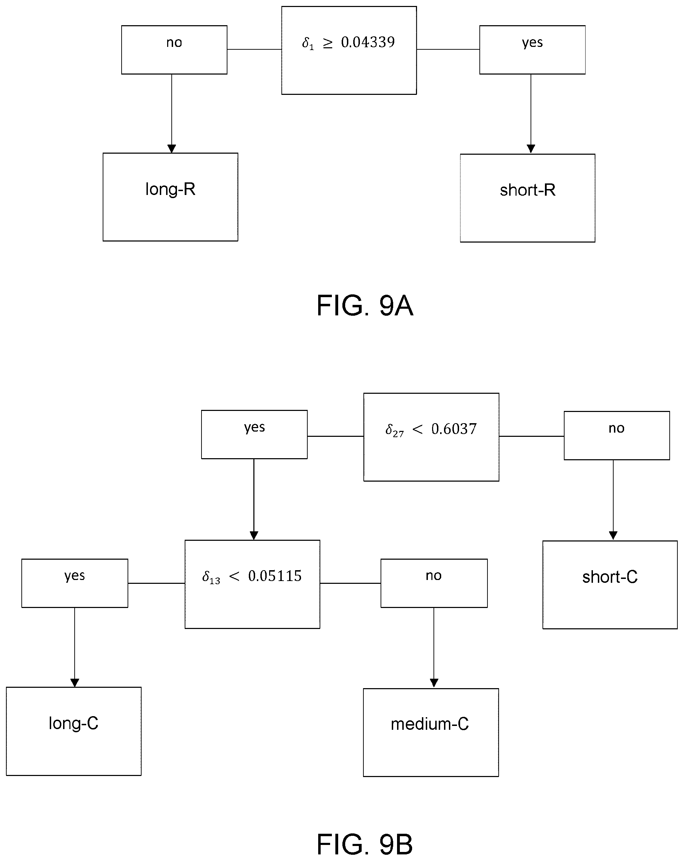

Recalibration curves may be classified as 'short-R' or 'long-R' based on a threshold associated with an approximate time $t = t_{max}$ of the maximum of the first derivative. Figure 9A shows a classification tree that may be trained on test recalibration curves. The classification tree is depth 1 tree.

Calibration curves may be classified as 'short-C', 'medium-C' or 'long-C' based on a threshold associated with an approximate time $t = t_{max}$ of the maximum of the first derivative. Figure 9B shows a classification tree that may be trained on test calibration curves. The classification tree may be a depth 2 tree.

Alternatively, the recalibration and calibration curves may be classified based on a threshold value indicating a slope of the calibration curve. For example, an average value of the calibration curve at a specified time after the valley point may be compared to a threshold.

Based on the prediction category, knowing if the curve is a calibration one or not, the predicted category may be used to choose a pre-defined set of parameters. To reduce computation time, $Z(t_m)$ may be computed every 2ms ($m = 1, 3, 5, 7, ..., 2n - 1, ...$) and $Z(t_{2n}) \doteq Z(t_{2n-1})$ may be determined for even steps. The parameters for the calibration may be determined as follows:

**Result:**

$C(t)$, **calibration or recalibration:** $t_m$

**Set of parameters:** $\sigma, p1, n_{max}, n_{stop2}, p_{stop1}$

1. Compute $MA_{10}(C)(t)$, from $t_{valley+10}, \dots t_{valley+38}$ resulting in 29 smoothed values $S_i$, $i = 1, \dots, 29$

2. Get $\delta_{i-2} = 100 \frac{S_i - S_1}{S_1}; i = 3, \dots, 29$

3. cRecalib = 0.04339134

4. cCalib1 = 0.6036762

5. cCalib2 = 0.05115039

6. $P_{stop1} = 0.02$

7. **if** $curveType = "Recalib"$ **then**

8. $p1 = 0.02$

9. **if** $\delta_1 \geq cRecalib$ **then**

10. $out = "short - R"$

11. **end**

12. **else**

13. $out = "medium - R"$

14. **end**

15. **end**

16. **else**

17. $p_1 = 0.1$

18. **if** $\delta_{27} < cCalib1$ **then**

19. **if** $\delta_{13} < cCalib2$ **then**

20. $out = "long - C"$

21. **end**

22. **else**

23. $out = "medium - C"$

24. **end**

25. **end**

26. **else**

27. $out = "short - C"$

28. **end**

29. **end**

30. **if** $out = "short - R"$ **then**

31. $\sigma = 0.01$

32. $n_{max} = 11$

33. $n_{stop2} = 5$

34. **end**

35. **else if** $out = "medium - R"$ **then**

36. $\quad\sigma = 0.03$

37. $\quad n_{max} = 25$

38. $\quad n_{stop2} = 10$

39. **end**

40. **else if** $out = "short - C"$ **then**

41. $\quad\sigma = 0.05$

42. $\quad n_{max} = 25$

43. $\quad n_{stop2} = 15$

44. **end**

45. **else if** $out = "medium - C"$ **then**

46. $\quad\sigma = 0.1$

47. $\quad n_{max} = 50$

48. $\quad n_{stop2} = 50$

49. $\quad p_{stop1} = 0.01$

50. **end**

51. **else**

52. $\quad\sigma = 0.2$

53. $\quad n_{max} = 75$

54. $\quad n_{stop2} = 100$

55. $\quad p_{stop1} = 0.01$

56. **end**

In experiments, the relative and absolute difference between the conductance at stopping time and the expected maximum conductance was computed. The relative difference of the detected maximum to the maximum of the conductance and the $\delta_S$(*loss*) were computed as $100 \cdot \dfrac{C(t_{stop}) - max_t C(t)}{max_t C(t) - C(t_{valley-True})}$ for the calibration curve where a c=valley is present, or $100 \cdot \dfrac{C(t_{stop}) - max_t C(t)}{max_t C(t) - C(t_0)}$ where no valley is present.

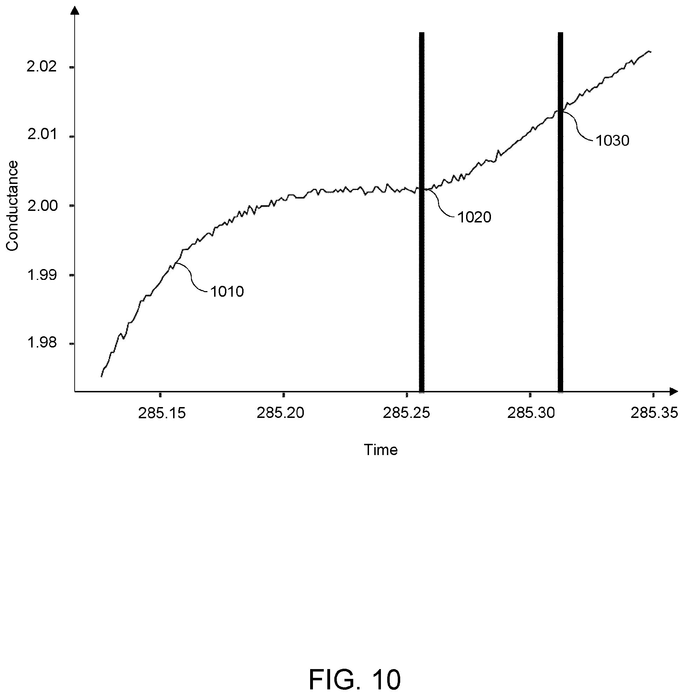

An example of a recalibration curve 1010 is shown in figure 10. Figure 10 also shows the determined hill point value 1020 and a point 1030, which fulfills the second stopping criteria.

For the purpose of the present description and of the appended claims, except where otherwise indicated, all numbers expressing amounts, quantities, percentages, and so forth, are to be understood as being modified in all instances by the term "about". Also, all ranges include the maximum and minimum points disclosed and include any intermediate ranges therein, which may or may not be specifically enumerated herein. Within this context, a number A may be considered to include numerical values that are within general standard error for the measurement of the property that the number A modifies. The number A, in some instances as used in the appended claims, may deviate by the percentages enumerated above provided that the amount by which A deviates does not materially affect the basic and novel characteristic(s) of the claimed invention. Also, all ranges include the maximum and minimum points disclosed and include any intermediate ranges therein, which may or may not be specifically enumerated herein.

**Claims**

1. A method (800) of calibrating an inductive heating device (230) for an aerosol-generating system, the method, performed by a controller (330), comprising:

   obtaining (810) a sequence of calibration values of an inductive heating device (230) for an aerosol-generating system, wherein the sequence of calibration values is associated with a calibration curve (1010), wherein the inductive heating device (230) comprises an inductor which is configured for being coupled to a susceptor (160) for heating an aerosol-forming substrate (110), wherein the sequence of calibration values comprises one of a sequence of conductance values and a sequence of resistance values, and wherein a value in the sequence of calibration values is associated with a calibration temperature of the susceptor (160),
   **characterized in that** the method comprises:

   smoothing (820) the sequence of calibration values to obtain a sequence of smoothed calibration values;
   determining (830) a first derivative of the sequence of smoothed calibration values;
   estimating (840) a maximum value of the first derivative of the sequence of smoothed calibration values;
   determining (850) at least one of a plateauing characteristic and a hill point value based on a first threshold associated with the estimated maximum value of the first derivative; and
   operating (870) the inductive heating device (230) in accordance with the determined at least one of a plateauing characteristic and a hill point value.

2. The method according to claim 1, wherein the smoothing the sequence of calibration values and the determining the first derivative of the sequence of smoothed calibration values are performed in one computation.

3. The method according to one of claims 1 and 2, wherein the estimating the maximum value of the first derivative of the sequence of smoothed calibration values comprises comparing a value of the first derivative of the sequence of smoothed calibration values with a predetermined number of values of the first derivative of the sequence of smoothed calibration values.

4. The method according to one of claims 1 and 2, wherein a value of the first derivative of the sequence of smoothed calibration values is estimated as the maximum value, when an average of a predetermined number of previous values of the first derivative of the sequence of smoothed calibration values is higher than the value of the first derivative of the sequence of smoothed calibration values.

5. The method according to one of claims 1 to 4, wherein the first threshold is a fraction of the maximum value of the first derivative of the sequence of smoothed calibration values.

6. The method according to one of claims 1 to 5, further comprising stopping heating of the inductive heating device, when the first derivative of the sequence of smoothed calibration values re-increases after the maximum value of the first derivative of the sequence of smoothed calibration values.

7. The method according to claim 6, wherein the re-increase of the first derivative of the sequence of smoothed calibration values after the maximum value of the first derivative of the sequence of smoothed calibration values is determined if an average of a specific number of consecutive values of the first derivative increase over time.

8. The method according to one of claims 1 to 7, further comprising determining a type of the calibration curve by classifying the calibration curve; and
   selecting, based on the determined type of the calibration curve, at least one parameter for the calibration.

9. The method according to claim 8, wherein the calibration curve is classified based on a slope of the calibration curve.

10. The method according to one of claims 1 to 9 further comprising stopping heating of the inductive heating device in response to determining the at least one of a plateauing characteristic and a hill point value.

11. An inductive heating device (230) for an aerosol-generating system, the inductive heating device (230) comprising a controller (330) configured to:

obtain a sequence of calibration values of the inductive heating device (230), wherein the sequence of calibration values is associated with a calibration curve (1010),
the inductive heating device (230) being **characterized in that** the controller (330) is configured to:

smooth the sequence of calibration values to obtain a sequence of smoothed calibration values;
determine a first derivative of the sequence of smoothed calibration values;
estimate a maximum value of the first derivative of the sequence of smoothed calibration values; and
determine at least one of a plateauing characteristic and a hill point value based on a first threshold associated with the estimated maximum value of the first derivative,
wherein the inductive heating device (230) is operated in accordance with the determined at least one of a plateauing characteristic and a hill point value,
wherein the inductive heating device (230) comprises an inductor which is configured for being coupled to a susceptor (160) for heating an aerosol-forming substrate (110), wherein the sequence of calibration values comprises one of a sequence of conductance values and a sequence of resistance values, and wherein a value in the sequence of calibration values is associated with a calibration temperature of the susceptor (160).

12. The inductive heating device according to claim 11, wherein the inductive heating device comprises:

a power source for providing a DC supply voltage and a DC current;
power supply electronics connected to the power source, wherein the power supply electronics comprises:

a DC/AC converter;
the inductor, wherein the inductor is connected to the DC/AC converter for the generation of an alternating magnetic field, when energized by an alternating current from the DC/AC converter; and
the controller, wherein the controller is configured to control the power provided to the power supply electronics to cause an increase of a temperature of the susceptor.

13. The inductive heating device according to claim 12, wherein the obtaining the sequence of calibration values comprises measuring a current associated with the supply electronics of the inductive heating device.

14. An aerosol-generating system, comprising the inductive heating device (230) according to one of claims 11 to 13 and an aerosol-generating article (100), wherein the aerosol-generating article (100) comprises the aerosol-forming substrate (110) and the susceptor (160).

**Patentansprüche**

1. Verfahren (800) für ein Kalibrieren einer induktiven Heizvorrichtung (230) für ein Aerosolerzeugungssystem, das Verfahren, durchgeführt von einem Regler (330), umfassend:
Erhalten (810) einer Folge von Kalibrierwerten einer induktiven Heizvorrichtung (230) für ein Aerosolerzeugungssystem, wobei die Folge von Kalibrierungswerten einer Kalibrierungskurve (1010) zugewiesen ist, wobei die induktive Heizvorrichtung (230) einen Induktor umfasst, der dazu eingerichtet ist, mit einem Suszeptor (160) für ein Erwärmen eines aerosolbildenden Substrats (110) gekoppelt zu werden, wobei die Folge von Kalibrierungswerten eine Folge von Leitfähigkeitswerten und eine Folge von Widerstandswerten umfasst, und wobei ein Wert in der Folge von Kalibrierungswerten einer Kalibrierungstemperatur des Suszeptors (160) zugewiesen ist, **dadurch gekennzeichnet, dass** das Verfahren umfasst:

Glätten (820) der Folge von Kalibrierungswerten, um eine Folge von geglätteten Kalibrierungswerten zu erhalten;
Bestimmen (830) einer ersten Ableitung der Folge von geglätteten Kalibrierungswerten;
Schätzen (840) eines Maximalwertes der ersten Ableitung der Folge von geglätteten Kalibrierungswerten;
Bestimmen (850) wenigstens eines von einer Plateau-Charakteristik und einem Hügelpunktwert basierend auf einem ersten Schwellenwert, der dem geschätzten Maximalwert der ersten Ableitung zugewiesen ist; und

Betreiben (870) der induktiven Heizvorrichtung (230) in Übereinstimmung mit dem bestimmten wenigstens einen von einer Plateau-Charakteristik und einem Hügelpunktwert.

2. Verfahren nach Anspruch 1, wobei das Glätten der Folge von Kalibrierungswerten und das Bestimmen der ersten Ableitung der Folge von geglätteten Kalibrierungswerten in einer einzigen Berechnung durchgeführt werden.

3. Verfahren nach einem der Ansprüche 1 und 2, wobei das Schätzen des Maximalwerts der ersten Ableitung der Folge von geglätteten Kalibrierungswerten ein Vergleichen eines Wertes der ersten Ableitung der Folge von geglätteten Kalibrierungswerten mit einer vorbestimmten Anzahl von Werten der ersten Ableitung der Folge von geglätteten Kalibrierungswerten umfasst.

4. Verfahren nach einem der Ansprüche 1 und 2, wobei ein Wert der ersten Ableitung der Folge geglätteter Kalibrierungswerte als Maximalwert geschätzt wird, wenn ein Mittelwert einer vorbestimmten Anzahl vorheriger Werte der ersten Ableitung der Folge geglätteter Kalibrierungswerte höher ist als der Wert der ersten Ableitung der Folge geglätteter Kalibrierungswerte.

5. Verfahren nach einem der Ansprüche 1 bis 4, wobei der erste Schwellenwert ein Bruchteil des Maximalwertes der ersten Ableitung der Folge von geglätteten Kalibrierungswerten ist.

6. Verfahren nach einem der Ansprüche 1 bis 5, ferner umfassend ein Beenden des Erwärmens der induktiven Heizvorrichtung, wenn die erste Ableitung der Folge von geglätteten Kalibrierungswerten nach dem Maximalwert der ersten Ableitung der Folge von geglätteten Kalibrierungswerten wieder ansteigt.

7. Verfahren nach Anspruch 6, wobei der erneute Anstieg der ersten Ableitung der Folge geglätteter Kalibrierungswerte nach dem Maximalwert der ersten Ableitung der Folge geglätteter Kalibrierungswerte ermittelt wird, wenn ein Mittelwert einer bestimmten Anzahl aufeinanderfolgender Werte der ersten Ableitung im Laufe der Zeit zunimmt.

8. Verfahren nach einem der Ansprüche 1 bis 7, ferner umfassend Bestimmen eines Typs der Kalibrierungskurve durch Klassifizieren der Kalibrierungskurve; und
Auswählen, basierend auf dem ermittelten Typ der Kalibrierungskurve, wenigstens eines Parameters für die Kalibrierung.

9. Verfahren nach Anspruch 8, wobei die Kalibrierungskurve basierend auf einer Steigung der Kalibrierungskurve klassifiziert wird.

10. Verfahren nach einem der Ansprüche 1 bis 9, ferner umfassend Beenden des Erwärmens der induktiven Heizvorrichtung in Reaktion auf das Bestimmen von wenigstens einem von einer Plateau-Charakteristik und einem Hügelpunktwert.

11. Induktive Heizvorrichtung (230) für ein Aerosolerzeugungssystem, die induktive Heizvorrichtung (230) umfassend einen Regler (330), der ausgelegt ist für:

Erhalten einer Folge von Kalibrierungswerten der induktiven Heizvorrichtung (230), wobei die Folge von Kalibrierungswerten einer Kalibrierungskurve (1010) zugewiesen ist,
die induktive Heizvorrichtung (230) dadurch charakterisiert ist, dass der Regler (330) ausgelegt ist für:

Glätten der Folge von Kalibrierungswerten, um eine Folge von geglätteten Kalibrierungswerten zu erhalten;
Bestimmen einer ersten Ableitung der Folge von geglätteten Kalibrierungswerten;
Schätzen eines Maximalwertes der ersten Ableitung der Folge von geglätteten Kalibrierungswerten; und
Bestimmen wenigstens eines von einer Plateau-Charakteristik und einem Hügelpunktwert basierend auf einem ersten Schwellenwert, der dem geschätzten Maximalwert der ersten Ableitung zugewiesen ist,
wobei die induktive Heizvorrichtung (230) in Übereinstimmung mit dem bestimmten wenigstens einen von einer Plateau-Charakteristik und einem Hügelpunktwert betrieben wird,
wobei die induktive Heizvorrichtung (230) einen Induktor umfasst, der dazu eingerichtet ist, mit einem Suszeptor (160) für ein Erwärmen eines aerosolbildenden Substrats (110) gekoppelt zu werden, wobei die Folge von Kalibrierungswerten eine Folge von Leitfähigkeitswerten und eine Folge von Widerstandswerten umfasst, und wobei ein Wert in der Folge von Kalibrierungswerten einer Kalibrierungstemperatur des Suszeptors (160) zugewiesen ist.

EP 4 369 962 B1

**12.** Induktive Heizvorrichtung nach Anspruch 11, wobei die induktive Heizvorrichtung aufweist:

eine Energiequelle für ein Vorsehen einer DC-Versorgungsspannung und einer DC-Energie;
Energieversorgungselektronik, die mit der Energiequelle verbunden ist, wobei die Energieversorgungselektronik aufweist:

einen DC/AC-Wandler;
den Induktor, wobei der Induktor mit dem DC/AC-Wandler für ein Erzeugen eines magnetischen Wechselfeldes verbunden ist, wenn er durch einen Wechselstrom von dem DC/AC-Wandler erregt wird; und
den Regler, wobei der Regler ausgelegt ist, die der Energieversorgungselektronik zugeführte Energie zu regeln, um einen Anstieg der Temperatur des Suszeptors zu bewirken.

**13.** Induktive Heizvorrichtung nach Anspruch 12, wobei das Erhalten der Folge von Kalibrierungswerten ein Messen einer Energie umfasst, die der Versorgungselektronik der induktiven Heizvorrichtung zugewiesen ist.

**14.** Aerosolerzeugungssystem, aufweisend die induktive Heizvorrichtung (230) nach einem der Ansprüche 11 bis 13 und einen aerosolerzeugenden Artikel (100), wobei der aerosolerzeugende Artikel (100) das aerosolbildende Substrat (110) und den Suszeptor (160) aufweist.

**Revendications**

**1.** Procédé (800) d'étalonnage d'un dispositif de chauffage par induction (230) pour un système de génération d'aérosol, le procédé, réalisé par un dispositif de commande (330), comprenant :
l'obtention (810) d'une séquence de valeurs d'étalonnage d'un dispositif de chauffage par induction (230) pour un système de génération d'aérosol, dans lequel la séquence de valeurs d'étalonnage est associée à une courbe d'étalonnage (1010), dans lequel le dispositif de chauffage par induction (230) comprend une inductance qui est configurée pour être couplée à un suscepteur (160) pour chauffer un substrat formant aérosol (110), dans lequel la séquence de valeurs d'étalonnage comprend l'une parmi une séquence de valeurs de conductance et une séquence de valeurs de résistance, et dans lequel une valeur dans la séquence de valeurs d'étalonnage est associée à une température d'étalonnage du suscepteur (160), **caractérisé en ce que** le procédé comprend :

le lissage (820) de la séquence de valeurs d'étalonnage pour obtenir une séquence de valeurs d'étalonnage lissées ;
la détermination (830) d'une dérivée première de la séquence de valeurs d'étalonnage lissées ;
l'estimation (840) d'une valeur maximale de la dérivée première de la séquence de valeurs d'étalonnage lissées ;
la détermination (850) d'au moins l'une parmi une caractéristique de palier et une valeur de point culminant sur la base d'un premier seuil associé à la valeur maximale estimée de la dérivée première ; et
le fonctionnement (870) du dispositif de chauffage par induction (230) conformément à l'au moins une déterminée parmi une caractéristique de palier et une valeur de point culminant.

**2.** Procédé selon la revendication 1, dans lequel le lissage de la séquence de valeurs d'étalonnage et la détermination de la dérivée première de la séquence de valeurs d'étalonnage lissées sont réalisés en un seul calcul.

**3.** Procédé selon l'une des revendications 1 et 2, dans lequel l'estimation de la valeur maximale de la dérivée première de la séquence de valeurs d'étalonnage lissées comprend la comparaison d'une valeur de la dérivée première de la séquence de valeurs d'étalonnage lissées avec un nombre prédéterminé de valeurs de la dérivée première de la séquence de valeurs d'étalonnage lissées.

**4.** Procédé selon l'une des revendications 1 et 2, dans lequel une valeur de la dérivée première de la séquence de valeurs d'étalonnage lissées est estimée en tant que la valeur maximale, lorsqu'une moyenne d'un nombre prédéterminé de valeurs précédentes de la dérivée première de la séquence de valeurs d'étalonnage lissées est supérieure à la valeur de la dérivée première de la séquence de valeurs d'étalonnage lissées.

**5.** Procédé selon l'une des revendications 1 à 4, dans lequel le premier seuil est une fraction de la valeur maximale de la dérivée première de la séquence de valeurs d'étalonnage lissées.

**6.** Procédé selon l'une des revendications 1 à 5, comprenant en outre l'arrêt du chauffage du dispositif de chauffage par

24

induction, lorsque la dérivée première de la séquence de valeurs d'étalonnage lissées est de nouveau croissance après la valeur maximale de la dérivée première de la séquence de valeurs d'étalonnage lissées.

7. Procédé selon la revendication 6, dans lequel la réaugmentation de la dérivée première de la séquence de valeurs d'étalonnage lissées après la valeur maximale de la dérivée première de la séquence de valeurs d'étalonnage lissées est déterminée si une moyenne d'un nombre spécifique de valeurs consécutives de la dérivée première augmente avec le temps.

8. Procédé selon l'une des revendications 1 à 7, comprenant en outre la détermination d'un type de la courbe d'étalonnage en classant la courbe d'étalonnage ; et
la sélection, sur la base du type déterminé de la courbe d'étalonnage, d'au moins un paramètre pour l'étalonnage.

9. Procédé selon la revendication 8, dans lequel la courbe d'étalonnage est classée sur la base d'une pente de la courbe d'étalonnage.

10. Procédé selon l'une des revendications 1 à 9, comprenant en outre l'arrêt du chauffage du dispositif de chauffage par induction en réponse à la détermination de l'au moins une parmi une caractéristique de palier et une valeur de point culminant.

11. Dispositif de chauffage par induction (230) pour un système de génération d'aérosol, le dispositif de chauffage par induction (230) comprenant un dispositif de commande (330) configuré pour :

obtenir une séquence de valeurs d'étalonnage du dispositif de chauffage par induction (230), dans lequel la séquence de valeurs d'étalonnage est associée à une courbe d'étalonnage (1010),
le dispositif de chauffage par induction (230) étant **caractérisé en ce que** le dispositif de commande (330) est configuré pour :

lisser la séquence de valeurs d'étalonnage pour obtenir une séquence de valeurs d'étalonnage lissées ;
déterminer une dérivée première de la séquence de valeurs d'étalonnage lissées ;
estimer une valeur maximale de la dérivée première de la séquence de valeurs d'étalonnage lissées ; et
déterminer au moins l'une parmi une caractéristique de palier et une valeur de point culminant sur la base d'un premier seuil associé à la valeur maximale estimée de la dérivée première,
dans lequel le dispositif de chauffage par induction (230) fonctionne conformément à l'au moins une déterminée parmi une caractéristique de palier et une valeur de point culminant,
dans lequel le dispositif de chauffage par induction (230) comprend une inductance qui est configurée pour être couplée à un suscepteur (160) pour chauffer un substrat formant aérosol (110), dans lequel la séquence de valeurs d'étalonnage comprend l'une parmi une séquence de valeurs de conductance et une séquence de valeurs de résistance, et dans lequel une valeur dans la séquence de valeurs d'étalonnage est associée à une température d'étalonnage du suscepteur (160).

12. Dispositif de chauffage par induction selon la revendication 11, dans lequel le dispositif de chauffage par induction comprend :

une source de puissance destinée à fournir une tension d'alimentation CC et un courant CC ;
une électronique d'alimentation électrique raccordée à la source de puissance, dans lequel l'électronique d'alimentation électrique comprend :

un convertisseur CC/CA ;
l'inductance, dans lequel l'inductance est raccordée au convertisseur CC/CA pour la génération d'un champ magnétique alternatif, lorsqu'il est excité par un courant alternatif provenant du convertisseur CC/CA ; et
le dispositif de commande, dans lequel le dispositif de commande est configuré pour commander la puissance alimentée vers l'électronique d'alimentation électrique pour provoquer une augmentation d'une température du suscepteur.

13. Dispositif de chauffage par induction selon la revendication 12, dans lequel l'obtention de la séquence de valeurs d'étalonnage comprend la mesure d'un courant associé à l'électronique d'alimentation du dispositif de chauffage par induction.

14. Système de génération d'aérosol, comprenant le dispositif de chauffage par induction (230) selon l'une quelconque des revendications 11 à 13 et un article de génération d'aérosol (100), dans lequel l'article de génération d'aérosol (100) comprend le substrat formant aérosol (110) et le suscepteur (160).

FIG. 1

FIG. 2A

FIG. 2B

EP 4 369 962 B1

230

320

$V_{DC}$, $I_{DC}$

310 → 330 → 340 → 350 → 240

$P_{AC}$

FIG. 3

FIG. 4

FIG. 5

FIG. 6

FIG. 7

800

802

804

810

820

830

840

850

860

870

FIG. 8

FIG. 9A

FIG. 9B

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020223350 A1